# EUROPÄISCHE PATENTSCHRIFT

(11) **EP 3 319 862 B1**
(45) Veröffentlichungstag und Bekanntmachung des Hinweises auf die Patenterteilung: **11.09.2019**
(21) Anmeldenummer: 16732630.5
(22) Anmeldetag: 28.06.2016
(51) Int. Cl.: B62D 1/184

(54) **FESTSTELLVORRICHTUNG FÜR EINE VERSTELLBARE LENKSÄULE EINES KRAFTFAHRZEUGS**
LOCKING DEVICE FOR AN ADJUSTABLE VEHICLE STEERING COLUMN
DISPOSITIF DE BLOCAGE POUR UNE COLONNE DE DIRECTION RÉGLABLE DE VÉHICULE

(30) Priorität: 07.07.2015 DE 102015212688
(43) Veröffentlichungstag der Anmeldung: 16.05.2018
(73) Patentinhaber: ThyssenKrupp Presta AG, 9492 Eschen (LI); thyssenkrupp AG, 45143 Essen (DE)
(72) Erfinder: SCHNITZER, Hieronymus, 9487 Gamprin (LI); PALTINISANU, Ciprian, 9492 Eschen (LI)
(74) Vertreter: thyssenkrupp Intellectual Property GmbH
(86) Internationale Anmeldenummer: PCT/EP2016/064936
(87) Internationale Veröffentlichungsnummer: WO 2017/005535

(56) Entgegenhaltungen:
- US-A1- 2004 104 565
- US-A1- 2008 191 457
- US-A1- 2015 090 068

## Beschreibung

Die Erfindung betrifft eine Feststellvorrichtung für eine verstellbare Lenksäule eines Kraftfahrzeugs, mit einem an einem Endbereich eines Klemmbolzens angebrachten Betätigungshebel, der mit einer Druckplatte eines Klemmmechanismus derart zusammenwirkt, dass bei Drehung des Betätigungshebels um die Klemmbolzenachse in Schließrichtung eine Zuspannkraft in Richtung der Klemmbolzenachse erzeugt und dabei die Lenksäule in der Feststellvorrichtung festgeklemmt wird und bei einer Drehung des Betätigungshebels in Öffnungsrichtung die Zuspannkraft reduziert wird, so dass die Klemmung gelöst und die Lenksäule frei verstellbar wird.

Derartige Feststellvorrichtungen sind beispielsweise aus der DE 10 2012 100 486 B3 oder der DE 10 2011 055 410 A1 bekannt. Bei den bekannten Feststellvorrichtungen sind auch Dämpfer zur Dämpfung der Bewegung des Betätigungshebels vorgesehen, damit dieser keine metallischen Geräusche in den Endanschlagbereichen verursacht. Des Weiteren offenbart die US 2015/0090068 A1 eine Feststellvorrichtung mit Dämpfungsanordnung für den Betätigungshebel, wobei ein Rollenpuffer in der Freigabestellung in Kontakt mit einem Wegbegrenzer steht. Nachteilig dabei ist die komplexe Herstellung eines derartigen Hebels. Zudem würde ein im Lauf der Zeit verschlissener Rollenpuffer die Geräuschdämpfung nicht mehr sicherstellen können.

Das Dokument US2015/090068 wird als nächstliegender Stand der Technik angesehen und offenbart eine Feststellvorrichtung gemäß dem Oberbegriff des Anspruchs 1.

Aufgabe der Erfindung ist es, eine Feststellvorrichtung der eingangs genannten Art bereitzustellen, die Geräusche bei der Verriegelung und Entriegelung des Betätigungshebels dauerhaft und zuverlässig dämpft, leicht hergestellt werden kann und Bauraum einspart.

Die erfindungsgemäße Lösung sieht vor, dass die Druckplatte einen im radialen Abstand zum Klemmbolzen angeordneten und in Richtung der Klemmbolzenachse vorstehenden Anschlagfinger aufweist, der in eine fensterartige Aussparung des Betätigungshebels eingreift, so dass die Drehung des Betätigungshebels möglich, aber durch Anschlag von gegenüberliegenden Anschlagflächen der Aussparung am Anschlagfinger sowohl in Öffnungsrichtung als auch in die entgegengesetzte Schließrichtung begrenzt ist, und dass mindestens eine der Anschlagflächen eine dämpfende Abdeckung aufweist. Die dämpfende Abdeckung dient hier als Anschlagdämpfer für die Bewegung des Betätigungshebels zumindest in Öffnungsrichtung. Die Anordnung mit fensterartiger Aussparung, Anschlagfinger und dämpfender Abdeckung ist einfach konstruiert und kann auf ebenso einfache Weise hergestellt werden, wobei nur geringe Fertigungskosten anfallen. Die Abnutzung der dämpfenden Abdeckung ist gering, so dass die Dämpfungswirkung der erfindungsgemäßen Feststellvorrichtung lange Zeit erhalten bleibt. Und selbst wenn schließlich die dämpfende Abdeckung doch abgenutzt sein sollte, kann sie auf denkbar einfachste Weise und mit geringstem Arbeitsaufwand gegen eine neue ausgewechselt werden. Die dämpfende Abdeckung kann aus einem natürlichen oder synthetischen Elastomer oder einem Kunststoff gefertigt sein. Im weiteren werden mit dem Begriff Kunststoff in Zusammenhang mit der Abdeckung ein natürliches Elastomer oder ein synthetisches Elastomer mit einbezogen, zur Vermeidung der jeweils erforderlichen Aufzählung.

Gemäß einer bevorzugten Ausführungsform ist eine den Anschlag in Öffnungsrichtung des Betätigungshebels bildende Öffnungsanschlagfläche mit der dämpfenden Abdeckung versehen. Bei dieser Ausführungsform wird die Bewegung des Betätigungshebels in Öffnungsrichtung gedämpft. Soll die Bewegung des Betätigungshebels auch in Schließrichtung gedämpft werden, empfiehlt sich eine Ausführungsform, bei der beide Anschlagflächen die dämpfende Abdeckung aufweisen. In diesem Fall ist es vorteilhaft, wenn die dämpfende Abdeckung als Kunststoffrahmen ausgestaltet ist, der beide Anschlagflächen und zwei die beiden Anschlagflächen verbindende Begrenzungsflächen der fensterartigen Aussparung abdeckt.

Der Kunststoffrahmen kann einstückig oder mehrteilig ausgebildet sein, wobei die genannten Begrenzungsflächen der fensterartigen Aussparung durch einen mehrteiligen Kunststoffrahmen nicht komplett abgedeckt werden.

Die Dämpfungswirkung kann noch verbessert werden durch die Maßnahme, dass die dämpfende Abdeckung an der Öffnungsanschlagsfläche zusätzlich ein Dämpfungselement zur Dämpfung der Bewegung des Betätigungshebels aufweist. Hierdurch wird die Bewegungsenergie des Betätigungshebels bei Kontakt mit dem Dämpfungselement auf der Öffnungsanschlagfläche noch wirkungsvoller gedämpft.

Falls auch in Schließrichtung Geräusche beim Anschlag des Betätigungshebels besonders gut gedämpft werden sollen, wird empfohlen, dass die dämpfende Abdeckung auch an einer den Anschlag in Schliessrichtung des Betätigungshebels bildende Schließanschlagsfläche zusätzlich ein Dämpfungselement zur Dämpfung der Bewegung des Betätigungshebels aufweist.

In einer einfachen Ausgestaltungsvariante der vorgenannten Ausführungsform ist das Dämpfungselement eine Gummieinlage. Diese kann besonders kostengünstig bereitgestellt werden.

In einer zweiten Ausgestaltungsvariante ist das Dämpfungselement in Form von ein oder zwei Blattfedern ausgestaltet.

In einer dritten vorteilhaften Ausgestaltungsvariante kann das Dämpfungselement auch in Form einer nach innen gerichteten Wölbung ausgestaltet sein.

Die Erfindung lässt sich noch verbessern durch die Maßnahme, dass sich der in Bezug auf die Klemmbolzenachse radiale Abstand zwischen den Begrenzungsflächen der fensterartigen Aussparung in Richtung auf die Öffnungsanschlagsfläche zu verringert, so dass der Anschlagfinger bei Annäherung an die Öffnungsanschlagfläche mit zunehmender Kraft zwischen den beiden Begrenzungsflächen eingeklemmt wird. Dadurch wird die Bewegung des Betätigungshebels in Öffnungsrichtung gebremst und somit die Wucht des Aufpralls auf die Anschlagfläche gedämpft.

In weiterer Ausgestaltung der Erfindung ist vorgesehen, dass eine der Begrenzungsflächen mit einer abgeknickten Blattfeder versehen ist derart, dass sie beim Betätigen des Betätigungshebels in Öffnungsrichtung von dem vorbeigleitenden Anschlagfinger zunächst komprimiert wird, um sich wieder zu entspannen, wenn der Anschlagfinger an der Öffnungsanschlagfläche anliegt, und dabei den Anschlagfinger gegen die Öffnungsanschlagfläche drückt. Durch die Blattfeder wird die Hebelöffnungskraft erhöht.

In einer Abwandlung des Erfindungsgedankens kann anstelle des Anschlagfingers der Klemmbolzen durch die fensterartige Aussparung geführt sein, um ebenfalls die Dämpfung beim Anschlag des Betätigungshebels zumindest in Öffnungsrichtung, vorzugsweise aber auch in Schließrichtung zu verbessern und ungewollte Geräusche zu unterdrücken.

Ausführungsbeispiele der Erfindung werden nachfolgend anhand der Zeichnungen näher erläutert. Die Figuren zeigen im Einzelnen:
- Figur 1:: eine perspektivische Darstellung einer verstellbaren Lenksäule eines Kraftfahrzeugs mit erfindungsgemäßer Feststellvorrichtung im geschlossenen Zustand;
- Figur 2:: eine Detailansicht aus Figur 1;
- Figur 3:: eine perspektivische Ansicht wie in Figur 1, jedoch im geöffneten Zustand;
- Figur 4:: eine Detailansicht aus Figur 3;
- Figur 5:: eine perspektivische Ansicht einer verstellbaren Lenksäule mit einer Explosionsdarstellung der wichtigsten Bauteile der erfindungsgemäßen Feststellvorrichtung;
- Figur 6:: eine Detailansicht einer erfindungsgemäßen fensterartigen Aussparung mit eingesetztem, beidseitigem Kunststoffrahmen;
- Figur 7:: wie Figur 6, jedoch zusätzlich mit Gummieinlage;
- Figur 8:: Detailansicht einer erfindungsgemäßen fensterartigen Aussparung mit einseitiger dämpfender Abdeckung;
- Figur 9:: Detailansicht wie Figur 6, jedoch zusätzlich mit nach innen gerichteter Wölbung vor der Öffnungsanschlagfläche;
- Figur 10:: Detailansicht wie Figur 6, jedoch mit zwei zusätzlichen Blattfedern vor der Öffnungsanschlagfläche;
- Figur 11:: Detailansicht wie Figur 6, jedoch zusätzlich mit abgeknickter Blattfeder vor einer Begrenzungsfläche der fensterartigen Aussparung.

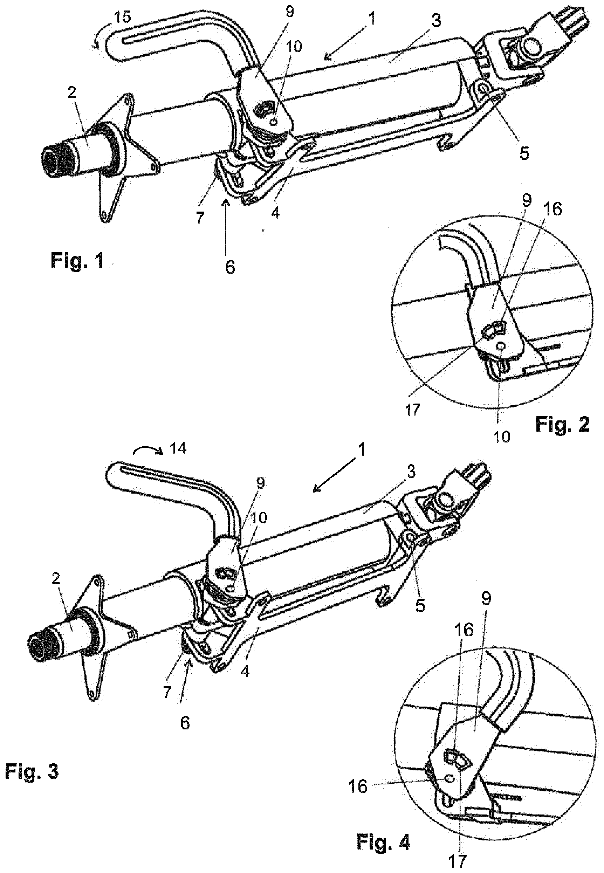

In den Figuren 1, 3 und 5 erkennt man eine verstellbare Lenksäule 1 eines Kraftfahrzeugs, bei der eine Lenkspindel 2 in einer Lenkspindellagereinheit 3 drehbar gelagert ist. Die Lenkspindellagereinheit 3 ist außerdem an einer an der nicht gezeigten Fahrzeugkarosserie zu befestigenden Trägereinheit 4 um eine Schwenkachse 5 schwenkbar gelagert. Zur Fixierung der Lenkspindellagereinheit 3 an der Trägereinheit 4 in einem vorgewählten Schwenkwinkel ist eine Feststellvorrichtung 6 vorgesehen, die im Wesentlichen an der Lenkspindellagereinheit 3 angeordnet ist und mit der Trägereinheit 4 zusammenwirkt.

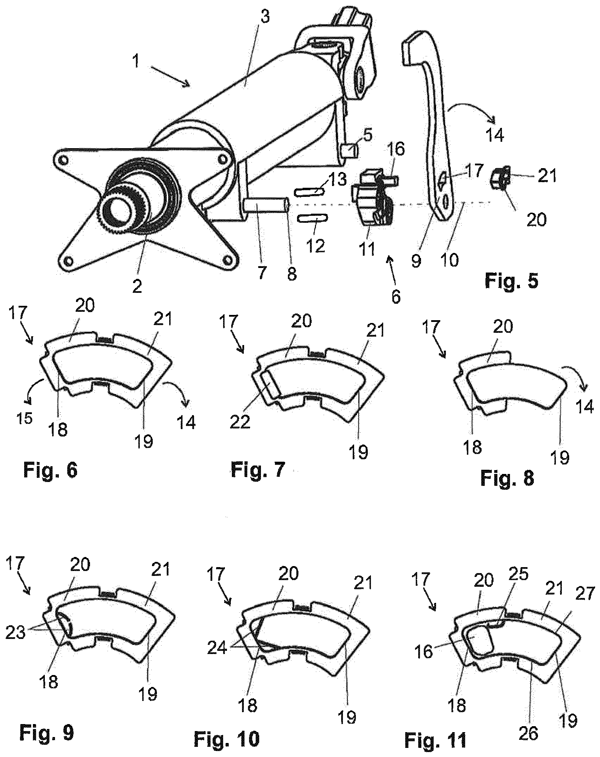

Die Feststellvorrichtung 6 weist einen Klemmbolzen 7 auf, der in seinem einen Endbereich 8 mit einem Betätigungshebel 9 verbunden ist, so dass die Klemmbolzenachse 10 durch den Betätigungshebel 9 hindurch geht. Auf dem Klemmbolzen 7 ist außerdem eine Druckplatte 11 angeordnet, die mit zwei zwischen der Druckplatte 11 und dem Betätigungshebel 9 angeordneten Stiften 12, 13 zusammenwirkt, so dass bei einer Betätigung des Betätigungshebels 9 diese Stifte 12, 13 um die Klemmbolzenachse 10 gegenüber der Druckplatte 11 verdreht werden. Dabei nehmen die Stifte 12, 13 eine neue Winkellage gegenüber der Klemmbolzenachse 10 ein, sodass ihre auf die Klemmbolzenachse 10 projizierte Länge geändert wird. Bei eine Drehung in Öffnungsrichtung 14 (Figuren 3 und 5) erfolgt eine Verkürzung der projizierten Länge, was ein Lösen der Klemmung der Feststellvorrichtung 6 bewirkt, so dass die Lenkspindellagereinheit 3 um die Schwenkachse 5 gegenüber der Trägereinheit 4 verschwenkbar ist, weil durch die Verkürzung der projizierten Länge in Öffnungsrichtung 14 die Zuspannkraft des Klemmbolzens 7 verringert wird. Wird hingegen der Betätigungshebel 9 in Schließrichtung 15 (siehe Figur 1) bewegt, so bewirkt die Drehung des Betätigungshebels 9 im Zusammenwirken mit den Stiften 12, 13 und der Druckplatte 11 eine Verlängerung der projizierten Länge, was ein Zuspannen der Feststellvorrichtung 6 in Richtung der Klemmbolzenachse 10 bewirkt, so dass die Lenkspindellagereinheit 3 mittels der Feststellvorrichtung 6 unverrückbar mit der Trägereinheit 4 durch Klemmeingriff verbunden ist. Die Stifte 12, 13 sind deshalb auch unter dem Begriff Kippstift bekannt.

Es ist jedoch festzustellen, dass die Erfindung auch auf eine alternative, hier nicht gezeigte Ausführungsform der Feststellvorrichtung anwendbar ist.

Insbesondere können in einer weiteren vorteilhaften Ausgestaltung der Erfindung können anstelle der Kippstifte 12, 13 Nockenelemente oder Rollkörper wie im Stand der Technik bekannt, eingesetzt werden. Die Druckplatte ist dann durch einen Nocken gebildet, der gegenüber einem Gegennocken verdreht wird. Die alternativ vorgeschlagenen Rollkörper laufen dann auf dem Nocken zu Bildung eine Roll-Kontaktes anstelle eines Gleitkontaktes.

Es ist auch denkbar und möglich, dass bei der Verdrehung des Betätigungshebels um die Klemmbolzenachse der Klemmbolzen selbst nicht verdreht wird, allerding eine Relativdrehung der Nockenelemente oder der Kippstifte erreicht wird.

Die Drehbewegung des Betätigungshebels 9 wird sowohl in Öffnungsrichtung 14 als auch in Schließrichtung 15 begrenzt, indem die Druckplatte 11 mit einem Anschlagfinger 16 versehen ist, der an der Druckplatte 11 im radialen Abstand zur Klemmbolzenachse 10 angeordnet ist und in Richtung der Klemmbolzenachse 10 von der Druckplatte 11 zum Betätigungshebel 9 hervorsteht. Der Betätigungshebel 9 ist mit einer fensterartigen Aussparung 17 versehen, in die der Anschlagfinger 16 hineinragt. Die fensterartige Aussparung 17 ist in der Drehrichtung 14, 15 des Betätigungshebels 9 so weit ausgedehnt, dass der Betätigungshebel 9 einen vorbestimmten Winkelbereich überstreichen kann, bis der Anschlagfinger 16 der Druckplatte 11 an eine von zwei Anschlagflächen 18, 19 der fensterartigen Aussparung 17 anstößt. Dadurch wird die Bewegung des Betätigungshebels 9 begrenzt und zwar sowohl in Öffnungsrichtung 14 als auch in Schließrichtung 15.

Wie man in Figur 8 erkennt, ist die Öffnungsanschlagsfläche 18, mit der der Anschlagfinger 16 die Bewegung des Betätigungshebels 9 in Öffnungsrichtung 14 begrenzt, mit einer im Wesentlichen C-förmigen dämpfenden Abdeckung 20 versehen, welche im Beispiel als Kunststoffrahmenteil ausgebildet ist, , welche den Aufprall der Öffnungsanschlagfläche 18 des Betätigungshebels 9 auf den Anschlagfinger 16 dämpft.

Bei dem Ausführungsbeispiel gemäß Figur 6 ist neben dem Kunststoffrahmenteil 20, welches die Öffnungsanschlagflächen 18 abdeckt ein zweites Kunststoffrahmenteil 21 vorgesehen, welches die Schließanschlagfläche 19 abdeckt und so zusätzlich den Aufprall der Schließanschlagfläche 19 des Betätigungshebels 9 auf den Anschlagfinger 16 dämpft, wenn die erfindungsgemäße Feststellvorrichtung 6 geschlossen, also festgeklemmt wird. Die beiden Kunststoffrahmenteile 20, 21 können separat voneinander oder einstückig als kompletter Kunststoffrahmen 20, 21, welcher die fensterartige Aussparung 17 vollumfänglich umgibt, vorzugsweise als 2K-Bauteil, ausgeführt sein.

Bei der in Figur 7 dargestellten Ausgestaltungsvariante ist zur Verbesserung der Dämpfungswirkung zusätzlich eine Gummieinlage 22 als Dämpfungselement vorgesehen. Die Gummieinlage 22 ist auf der Öffnungsanschlagfläche 18 angeordnet.

Bei der Ausgestaltungsvariante gemäß Figur 9 ist an der Öffnungsanschlagfläche 18 eine nach innen gerichtete Wölbung 23 aus Kunststoffmaterial angeordnet, die als Dämpfungselement die Öffnungsbewegung des Betätigungshebels 9 besonders gut dämpft.

Bei der Ausgestaltungsvariante gemäß Figur 10 sind auf der Öffnungsanschlagfläche 18 zwei Blattfedern 24 als Dämpfungselemente angeordnet, um die Öffnungsbewegung des Betätigungshebels 9 wirkungsvoll zu dämpfen.

Bei der Ausführungsform gemäß Figur 11 ist eine abgeknickte Blattfeder 25 auf einer von zwei Begrenzungsflächen 26, 27, die die Öffnungsanschlagsfläche 18 und die Schließanschlagsfläche 19 der fensterartigen Aussparung 17 miteinander verbinden, angeordnet. Die abgeknickte Blattfeder 25 wird beim Vorbeigleiten des Anschlagfingers 16 komprimiert und hält dann im entspannten oder teilentspannten Zustand den Anschlagfinger 16 in Anlage an der Öffnungsanschlagsfläche 18.

Die genannten Begrenzungsflächen 26, 27 der fensterartigen Aussparung 17 müssen nicht zwangsläufig über die gesamte Breite der fensterartigen Aussparung 17 gleiche Abstände zueinander haben. In einer Weiterentwicklung der Erfindung ist sogar vorgesehen, dass sich der in Bezug auf die Klemmbolzenachse 10 radiale Abstand zwischen den Begrenzungsflächen 26, 27 in Richtung auf die Öffnungsanschlagfläche 18 zu verringert, so dass der Anschlagfinger 16 bei Annäherung an die Öffnungsanschlagfläche 18 mit zunehmender Kraft zwischen den beiden Begrenzungsflächen 26 und 27 eingeklemmt wird. Dadurch wird die Öffnungsbewegung des Betätigungshebels 9 in Öffnungsrichtung 14 ganz besonders gut abgebremst und gedämpft.

### BEZUGSZEICHENLISTE

- 1: Lenksäule
- 2: Lenkspindel
- 3: Lenkspindellagereinheit
- 4: Trägereinheit
- 5: Schwenkachse
- 6: Feststellvorrichtung
- 7: Klemmbolzen
- 8: Endbereich
- 9: Betätigungshebel
- 10: Klemmbolzenachse
- 11: Druckplatte
- 12: Stift
- 13: Stift
- 14: Öffnungsrichtung
- 15: Schließrichtung
- 16: Anschlagfinger
- 17: fensterartige Aussparung
- 18: Öffnungsanschlagfläche
- 19: Schließanschlagfläche
- 20: Dämpfende Abdeckung
- 21: Dämpfende Abdeckung
- 22: Gummieinlage
- 23: Wölbung
- 24: Blattfedern
- 25: abgeknickte Blattfeder
- 26: Begrenzungsfläche
- 27: Begrenzungsfläche

## Patentansprüche

1. Feststellvorrichtung für eine verstellbare Lenksäule (1) eines Kraftfahrzeugs, mit einem an einem Endbereich (8) eines Klemmbolzens (7) angebrachten Betätigungshebel (9), der mit einer Druckplatte (11) eines Klemmmechanismus (7, 9, 11, 12, 13) derart zusammenwirkt, dass bei Drehung des Betätigungshebels (9) um die Klemmbolzenachse (10) in Schließrichtung (15) eine Zuspannkraft in Richtung der Klemmbolzenachse (10) erzeugt und dabei die Lenksäule (1) in der Feststellvorrichtung (6) festgeklemmt wird und bei einer Drehung des Betätigungshebels (9) in Öffnungsrichtung (14) die Zuspannkraft reduziert wird, so dass die Klemmung gelöst und die Lenksäule (1) frei verstellbar wird, **dadurch gekennzeichnet, dass** die Druckplatte (11) einen im radialen Abstand zum Klemmbolzen (7) angeordneten und in Richtung der Klemmbolzenachse (10) vorstehenden Anschlagfinger (16) aufweist, der in eine fensterartige Aussparung (17) des Betätigungshebels (9) eingreift, so dass die Drehung des Betätigungshebels (9) möglich, aber durch Anschlag von gegenüberliegenden Anschlagflächen (18,19), der fensterartigen Aussparung (17) am Anschlagfinger (16) sowohl in Öffnungsrichtung (14) als auch in Schließrichtung (15) begrenzt ist, und dass mindestens eine der Anschlagflächen (18, 19) eine dämpfende Abdeckung (20, 21) aufweist.

2. Feststellvorrichtung nach Anspruch 1, **dadurch gekennzeichnet, dass** eine den Anschlag in Öffnungsrichtung (14) des Betätigungshebels (9) bildende Öffnungsanschlagfläche (18) die dämpfende Abdeckung (20, 21) aufweist.

3. Feststellvorrichtung nach Anspruch 1 oder 2, **dadurch gekennzeichnet, dass** beide Anschlagflächen (18, 19) die dämpfende Abdeckung (20, 21) aufweisen.

4. Feststellvorrichtung nach einem der vorhergehenden Ansprüche, **dadurch gekennzeichnet, dass** die dämpfende Abdeckung (20, 21) als Kunststoffrahmen ausgestaltet ist, der beide Anschlagflächen (18, 19) und zwei die beiden Anschlagflächen (18, 19) verbindende Begrenzungsflächen (26, 27) der fensterartigen Aussparung (17) abdeckt.

5. Feststellvorrichtung nach einem der vorhergehenden Ansprüche, **dadurch gekennzeichnet, dass** die dämpfende Abdeckung (20) an der Öffnungsanschlagfläche (18) zusätzlich ein Dämpfungselement (22, 23, 24) zur Dämpfung der Bewegung des Betätigungshebels (9) aufweist.

6. Feststellvorrichtung nach Anspruch 5, **dadurch gekennzeichnet, dass** auch die dämpfende Abdeckung (21) an einer den Anschlag in Schliessrichtung (15) des Betätigungshebels (9) bildende Schließanschlagfläche (19) zusätzlich ein Dämpfungselement (22, 23, 24) zur Dämpfung der Bewegung des Betätigungshebels (9) aufweist.

7. Feststellvorrichtung nach Anspruch 5 oder 6, **dadurch gekennzeichnet, dass** das Dämpfungselement (22, 23, 24) eine Gummieinlage (22) ist.

8. Feststellvorrichtung nach Anspruch 5 oder 6, **dadurch gekennzeichnet, dass** das Dämpfungselement (22, 23, 24) in Form von ein oder zwei Blattfedern (24) ausgestaltet ist.

9. Feststellvorrichtung nach Anspruch 5 oder 6, **dadurch gekennzeichnet, dass** das Dämpfungselement (22, 23, 24) in Form einer nach innen gerichteten Wölbung (23) ausgestaltet ist.

10. Feststellvorrichtung nach einem der vorhergehenden Ansprüche, **dadurch gekennzeichnet, dass** sich der in Bezug auf die Klemmbolzenachse (10) radiale Abstand zwischen Begrenzungsflächen (26, 27) der fensterartigen Aussparung (17) in Richtung auf die Öffnungsanschlagfläche (18) zu verringert, so dass der Anschlagfinger (16) bei Annäherung an die Öffnungsanschlagfläche (18) mit zunehmender Kraft zwischen den beiden Begrenzungsflächen (26, 27) eingeklemmt wird.

11. Feststellvorrichtung nach einem der vorhergehenden Ansprüche, **dadurch gekennzeichnet, dass** eine der Begrenzungsflächen (26, 27) mit einer abgeknickten Blattfeder (25) versehen ist derart, dass sie beim Betätigen des Betätigungshebels (9) in Öffnungsrichtung (14) von dem vorbeigleitenden Anschlagfinger (16) zunächst komprimiert wird, um sich wieder zu entspannen, wenn der Anschlagfinger (16) an der Öffnungsanschlagfläche (18) anliegt, und dabei den Anschlagfinger (16) gegen die Öffnungsanschlagfläche (18) drückt.

## Claims

1. Locking device for an adjustable steering column (1) of a motor vehicle, with an activating lever (9), attached at one end region (8) of a clamping bolt (7), which interacts with a pressure plate (11) of a clamping mechanism (7, 9, 11, 12, 13) in such a way that, when the activating lever (9) is rotated about the axis (10) of the clamping bolt in the closing direction (15), a clamping force directed at the axis (10) of the clamping bolt is generated and the steering column (1) is thus clamped in the locking device (6) and, when the activating lever (9) is rotated in the opening direction (14), the clamping force is reduced so that the clamping action is released and the steering column (1) can be adjusted freely, **characterized in that** the pressure plate (11) comprises an abutment finger (16) arranged radially at a distance from the clamping bolt (7) and projecting in the direction of the axis (10) of the clamping bolt, which engages in a window-like slot (17) of the activating lever (9) so that the rotation of the activating lever (9) is possible but is limited by virtue of the abutment of opposite abutment surfaces (18, 19) of the window-like slot (17) against the abutment finger (16), both in the opening direction (14) and in the closing direction (15), and that at least one of the abutment surfaces (18, 19) comprises a damping cover (20, 21).

2. Locking device according to Claim 1, **characterized in that** an opening abutment surface (18) forming the abutment in the opening direction (14) of the activating lever (9) comprises the damping cover (20, 21).

3. Locking device according to Claim 1 or 2, **characterized in that** both abutment surfaces (18, 19) comprise the damping cover (20, 21).

4. Locking device according to one of the preceding claims, **characterized in that** the damping cover (20, 21) takes the form of a plastic frame which covers both abutment surfaces (18, 19) and two limiting surfaces (26, 27), connecting the two abutment surfaces (18, 19), of the window-like slot (17) .

5. Locking device according to one of the preceding claims, **characterized in that** the damping cover (20) additionally comprises, on the opening abutment surface (18), a damping element (22, 23, 24) for damping the movement of the activating lever (9).

6. Locking device according to Claim 5, **characterized in that** the damping cover (21) additionally comprises, on a closing abutment surface (19) forming the abutment in the closing direction (15) of the activating lever (9), a damping element (22, 23, 24) for damping the movement of the activating lever (9).

7. Locking device according to Claim 5 or 6, **characterized in that** the damping element (22, 23, 24) is a rubber insert (22).

8. Locking device according to Claim 5 or 6, **characterized in that** the damping element (22, 23, 24) takes the form of one or two leaf springs (24).

9. Locking device according to Claim 5 or 6, **characterized in that** the damping element (22, 23, 24) takes the form of an inward-facing bulge (23).

10. Locking device according to one of the preceding claims, **characterized in that** the radial distance, with respect to the axis (10) of the clamping bolt, between the limiting surfaces (26, 27) of the window-like slot (17) reduces in the direction of the opening abutment surface (18) such that the abutment finger (16) is clamped with increasing force between the two limiting surfaces (26, 27) as one approaches the opening abutment surface (18).

11. Locking device according to one of the preceding claims, **characterized in that** one of the limiting surfaces (26, 27) is provided with a bent leaf spring (25) in such a way that, when the activating lever (9) is activated in the opening direction (14), said leaf spring is first compressed by the abutment finger (16) as it slides past and is then relaxed again when the abutment finger (16) lies against the opening abutment surface (18) and thus presses the abutment finger (16) against the opening abutment surface (18).

## Revendications

1. Dispositif de blocage pour une colonne de direction réglable (1) d'un véhicule automobile, avec un levier d'actionnement (9) monté sur une région d'extrémité (8) d'un boulon de serrage (7), qui coopère avec une plaque de pression (11) d'un mécanisme de serrage (7, 9, 11, 12, 13), de telle manière que lors d'une rotation du levier d'actionnement (9) autour de l'axe du boulon de serrage (10) dans le sens de la fermeture (15) une force de serrage soit produite dans la direction de l'axe du boulon de serrage (10) et que la colonne de direction (1) soit en l'occurrence bloquée dans le dispositif de blocage (6) et que lors d'une rotation du levier d'actionnement (9) dans le sens de l'ouverture (14) la force de serrage soit réduite, de telle manière que le serrage soit relâché et que la colonne de direction (1) soit librement réglable, **caractérisé en ce que** la plaque de pression (11) présente un doigt de butée (16) disposé à une distance radiale du boulon de serrage (7) et saillant dans la direction de l'axe du boulon de serrage (10), qui s'engage dans une découpe (17) en forme de fenêtre du levier d'actionnement (9) de telle manière que la rotation du levier d'actionnement (9) soit possible mais soit limitée par butée de faces de butée opposées (18, 19) de la découpe en forme de fenêtre (17) sur le doigt de butée (16) aussi bien dans le sens de l'ouverture (14) que dans le sens de la fermeture (15), et **en ce qu'**au moins une des faces de butée (18, 19) présente un recouvrement d'amortissement (20, 21).

2. Dispositif de blocage selon la revendication 1, **caractérisé en ce qu'**une face de butée d'ouverture (18) formant la butée dans le sens de l'ouverture (14) du levier d'actionnement (9) présente le recouvrement d'amortissement (20, 21).

3. Dispositif de blocage selon une revendication 1 ou 2, **caractérisé en ce que** les deux faces de butée (18, 19) présentent le recouvrement d'amortissement (20, 21).

4. Dispositif de blocage selon l'une quelconque des revendications précédentes, **caractérisé en ce que** le recouvrement d'amortissement (20, 21) est formé par un cadre en matière plastique, qui recouvre les deux faces de butée (18, 19) et deux faces de limitation (26, 27) de la découpe en forme de fenêtre (17) reliant les deux faces de butée (18, 19).

5. Dispositif de blocage selon l'une quelconque des revendications précédentes, **caractérisé en ce que** le recouvrement d'amortissement (20) sur la face de butée d'ouverture (18) présente en plus un élément d'amortissement (22, 23, 24) pour amortir le mouvement du levier d'actionnement (9).

6. Dispositif de blocage selon la revendication 5, **caractérisé en ce que** le recouvrement d'amortissement (21) sur une face de butée de fermeture (19) formant la butée dans le sens de la fermeture (15) du levier d'actionnement (9) présente en plus également un élément d'amortissement (22, 23, 24) pour amortir le mouvement du levier d'actionnement (9).

7. Dispositif de blocage selon une revendication 5 ou 6, **caractérisé en ce que** l'élément d'amortissement (22, 23, 24) est un insert de caoutchouc (22).

8. Dispositif de blocage selon une revendication 5 ou 6, **caractérisé en ce que** l'élément d'amortissement (22, 23, 24) est réalisé sous la forme d'un ou de deux ressort(s) à lame (24).

9. Dispositif de blocage selon une revendication 5 ou 6, **caractérisé en ce que** l'élément d'amortissement (22, 23, 24) est réalisé sous la forme d'une courbure dirigée vers l'intérieur (23).

10. Dispositif de blocage selon l'une quelconque des revendications précédentes, **caractérisé en ce que** la distance radiale par rapport à l'axe du boulon de serrage (10) entre les faces de limitation (26, 27) de la découpe en forme de fenêtre (17) se réduit en direction de la face de butée d'ouverture (18), de telle manière que le doigt de butée (16) se serre entre les deux faces de limitation (26, 27) avec une force de serrage croissante lors de l'approche de la face de butée d'ouverture (18).

11. Dispositif de blocage selon l'une quelconque des revendications précédentes, **caractérisé en ce qu'**une des faces de limitation (26, 27) est munie d'un ressort à lame coudé (25), de telle manière qu'il soit d'abord comprimé lors de l'actionnement du levier d'actionnement (9) dans le sens de l'ouverture (14) par le doigt de butée (16) glissant le long de celui-ci, pour se détendre de nouveau lorsque le doigt de butée (16) s'applique sur la face de butée d'ouverture (18), et presse en l'occurrence le doigt de butée (16) contre la face de butée d'ouverture (18).
